# EUROPÄISCHE PATENTSCHRIFT

(11) **EP 2 897 788 B1**
(45) Veröffentlichungstag und Bekanntmachung des Hinweises auf die Patenterteilung: **23.05.2018**
(21) Anmeldenummer: 13756181.7
(22) Anmeldetag: 04.09.2013
(51) Int. Cl.: B29C 70/88, B29C 70/30, B29C 70/08, B29C 70/48

(54) **FUNKTIONSOPTIMIERTES FASERVERBUNDBAUTEIL UND VERFAHREN ZU DESSEN HERSTELLUNG**
FUNCTIONALLY OPTIMISED FIBRE COMPOSITE COMPONENT AND METHOD FOR THE PRODUCTION THEREOF
ÉLÉMENT COMPOSITE RENFORCÉ PAR DES FIBRES OPTIMISÉ FONCTIONNELLEMENT, ET PROCÉDÉ DE FABRICATION DUDIT ÉLÉMENT COMPOSITE

(30) Priorität: 19.09.2012 DE 102012216727
(43) Veröffentlichungstag der Anmeldung: 29.07.2015
(73) Patentinhaber: Bayerische Motoren Werke Aktiengesellschaft, 80809 München (DE)
(72) Erfinder: GRUBER, Wolfgang, 84028 Landshut (DE); POGGENBORG, Ralf, 84051 Altheim (DE); SOLDNER, Florian, 83098 Brannenburg (DE); VALLERIUS, Markus, 80335 München (DE); ZEIDLER, Matthias, 85221 Dachau (DE)
(86) Internationale Anmeldenummer: PCT/EP2013/068262
(87) Internationale Veröffentlichungsnummer: WO 2014/044528

(56) Entgegenhaltungen:
- EP-A1- 1 829 661
- WO-A1-2004/078461

## Beschreibung

Die Erfindung betrifft ein Faserverbundbauteil, insbesondere für eine Fahrzeugstruktur, gemäß dem Oberbegriff des Patentanspruchs 1 sowie ein Verfahren zu dessen Herstellung.

Bauteile aus Faserverbundmaterial werden in zunehmendem Maße eingesetzt, um ein Gewicht von Kraftfahrzeugen zu senken. Ein häufig angewandtes Verfahren zur Herstellung dieser Faserverbundbauteile ist das sogenannte Resin Transfer Molding (kurz: RTM). Hierbei werden Fasermatten, wie beispielsweise Gelege, Gewebe und Geflechte aus Glas- oder Kohlenstofffasern, in einem Formgebungsprozess in eine definierte räumliche Form gepresst. Die auf diese Weise erzeugten vorgeformten Fasermatten werden als sogenannte "Vorformlinge" bzw. "Preforms" bezeichnet und anschließend in eine beheizbare Spritzform eingelegt, in die eine Matrix zum Imprägnieren der Fasermatten injiziert wird.

Um eine Formstabilität der Fasermatten im Schritt des Vorformens zu erreichen, werden diese zunächst entsprechend einer gewünschten Kontur zugeschnitten und beispielsweise mit einem Binder (in der Regel Kunststoffpulver) beaufschlagt. In einem nachfolgenden Press- und Erhitzungsvorgang werden die Fasermatten in einem Formwerkzeug in die gewünschte Form gepresst und gleichzeitig der Binder geschmolzen. Nach einem Abkühlen und Erstarren des Binders verkleben die einzelnen Fasern der Fasermatte derart, dass die Fasermatte die aufgeprägte Form auch bei einem anschließenden Entnehmen aus dem Formwerkzeug beibehält. Trotz des Verklebens bleibt eine im Wesentlichen flexible und offenporige Form der vorgeformten Fasermatte erhalten, so dass die injizierte Matrix in die Fasermatte eindringen und diese möglichst vollständig imprägnieren kann.

Eine Dicke der verwendeten Fasermatten ist üblicherweise auf die am stärksten belasteten Bereiche des zu erzeugenden Bauteils ausgelegt und erstreckt sich durchgängig durch das gesamte Bauteil. Folglich bestimmt die höchste zu erwartende Lastkomponente die Wandstärke der Fasermatte für das gesamte Bauteil.

Die auf diese Weise hergestellten Faserverbundbauteile weisen in der Regel ein geringeres Gewicht auf als vergleichbare Metallbauteile, sind jedoch in Herstellung- und Materialkosten teuer.

Es ist daher Aufgabe der Erfindung derartige Faserverbundbauteile sowie ein zugehöriges Herstellungsverfahren insbesondere hinsichtlich des Bauteilgewichts und der Herstellungskosten zu verbessern.

Die EP 1 829 661 A1 beschreibt die Herstellung eines Faserbauteils gemäß dem Oberbegriff des Anspruchs 7 mit einer gestapelten Anordnung von einzelnen Faserlagen, gemäß dem Oberbegriff des Anspruchs 1 welche sich in ihren Lagendicken unterscheiden, wobei jedoch jede Faserlage jeweils eine einheitliche Lagendicke über das gesamte Bauteil hinweg aufweist.

Diese Aufgabe wird gelöst mittels eines Faserverbundbauteils mit den Merkmalen des Patentanspruchs 1 sowie eines Herstellungsverfahrens mit den Merkmalen des Patentanspruchs 9. Vorteilhafte Ausgestaltungsformen ergeben sich aus den jeweils abhängigen Patentansprüchen.

Demnach wird ein Faserverbundbauteil bereitgestellt, insbesondere für eine Fahrzeugstruktur, das eine Faserstruktur aufweist, welche mindestens eine Faserlage umfasst. Zumindest eine der mindestens einen Faserlage wird von einer Anzahl von vorgeformten Fasermatten gebildet.

Hierbei weist eine erste vorgeformte Fasermatte eine größere Fasermattendicke auf, als eine zweite vorgeformte Fasermatte aus der Anzahl von vorgeformten Fasermatten der zumindest einen Faserlage.

Unter der Dicke einer Fasermatte ist im Rahmen dieser Beschreibung eine entsprechende Höhe der im Wesentlichen flächigen Fasermatte zu verstehen. Vorzugsweise weisen die verwendeten Fasermatten trotz unterschiedlicher Dicken die gleiche Faservolumendichte auf. Dies bedeutet, dass in diesem Fall eine dickere Fasermatte eine größere Anzahl an Fasern bzw. Faser-Rovings in Höhenrichtung aufweist als eine dünnere Fasermatte.

Beispielsweise umfasst das Faserverbundbauteil eine einzelne Faserlage, die im Rahmen eines Herstellungsverfahrens, wie beispielswiese dem beschriebenen RTM Verfahren, mit einer Matrix imprägniert wird. Die Faserlage erstreckt sich in der Regel flächig durch das gesamte Bauteil oder zumindest durch einen oder mehrere zu verstärkende(n) Abschnitt(e) des Bauteils. Selbstverständlich können statt einer einzelnen Faserlage mehrere Faserlagen in denselben Bereichen oder in unterschiedlichen Bereichen des Faserverbundbauteils vorgesehen sein, die jeweils entweder entsprechend der Beschreibung mehrere Fasermatten gleicher oder unterschiedlicher Dicke umfassen.

Gemäß einer Ausführungsform wird jede dieser Faserlagen durch die Anzahl von vorgeformten Fasermatten gebildet, wobei einzelne der Fasermatten eine unterschiedliche Fasermattendicke gegenüber den anderen Fasermatten der jeweiligen Faserlage aufweisen. Dies ermöglicht, an besonderen Stellen des Faserverbundbauteils Fasermatten mit größerer Fasermattendicke und an anderen Stellen Fasermatten mit geringerer Fasermattendicke innerhalb derselben Faserlage vorzusehen. Die Faserlage weist demnach in Ihrer Erstreckungsrichtung keine über das Bauteil konstante sondern eine lokal variierende Fasermattendicke auf.

Es ergibt sich hieraus der Vorteil, dass bei einer bedarfsgerechten Anordnung dieser Fasermatten auf eine durchgängig konstante Fasermattendicke verzichtet werden kann, die ansonsten aufgrund der maximalen Belastungswerte des Faserverbundbauteils ausgelegt und in gleicher Dicke in den weniger stark belasteten Bereichen vorgesehen werden müsste.

Diese Maßnahme erlaubt einerseits teures und aufwendig herzustellendes Fasermaterial einzusparen und andererseits ein Gewicht des erzeugten Faserverbundbauteils zu reduzieren. Es kann also ein optimales Gewicht des Faserverbundbauteils durch lokal geringere Wandstärken bereitgestellt werden, die auf diese Weise geringere Materialkosten ermöglichen.

Gemäß einer weiteren Ausführungsform umfasst die zumindest eine Faserlage eine Gewebeschicht, eine Gelegeschicht, eine Geflechtschicht und/oder eine unidirektionale oder multidirektionale Faserschicht. Hierunter sind ebenfalls Faservliese zu verstehen. Als entsprechende Schicht ist hierbei stets eine baulich miteinander verbundene Anordnung von Fasermaterial (Einzelfasern oder sogenannte Rovings) zu verstehen, insbesondere auch sogenannte Stacks mit mehreren miteinander verbundenen Faserebenen. Als Fasermaterial ist jede zur Bauteilverstärkung geeignete Faser, insbesondere Kohle-, Glas-, Aramid- oder Naturfasern sowie Mischungen hieraus einsetzbar. Die vorgeformten Fasermatten werden flächig nebeneinander angeordnet, um die zumindest eine Faserlage zu bilden. Bildlich gesprochen bedeutet dies, dass die vorgeformten Fasermatten "mosaikartig" nebeneinander gelegt bzw. zusammengefügt werden, so dass die Fasermatten die möglichst durchgängige Faserlage bilden. Insbesondere ist die flächige Anordnung der Fasermatten derart zu verstehen, dass die Oberflächen der einzelnen Fasermatten eine gemeinsame Oberfläche der auf diese Weise zusammengesetzten Faserlage bilden, welche zum Beispiel der räumlichen Bauteilform folgt. Beispielsweise können die einzelnen Fasermatten mit ihren Stirnseiten mittels einer Stoßverbindung miteinander verbunden sein. Gemäß einer weiteren Ausführungsform sind die vorgeformten und flächig nebeneinander angeordneten Fasermatten in einander zugewandten Randbereichen miteinander überlappend angeordnet, um die zumindest eine Faserlage zu bilden. Die Fasermatten sind demnach nicht nur mosaikartig nebeneinander angeordnet, sondern überlappen sich in ihren Randbereichen. Trotz dieser Überlappungen ist diese Anordnung aus Fasermatten dennoch als eine gemeinsame Faserlage zu verstehen. Die überlappenden Bereiche mit gegebenenfalls vorliegenden Materialaufdopplungen sind hierbei nicht zur Betrachtung der eigentlichen Faserlage und deren Dicke heranzuziehen. Aufgrund der Überlappungen kann eine möglichst haltbare Verbindung der einzelnen Fasermatten erzielt werden, die eine nochmals erhöhte Verbindungsfestigkeit der Fasermatten aufweist.

Des Weiteren umfasst das Faserverbundbauteil eine erste Anzahl von Krafteinleitungsabschnitten wobei eine erste vorgeformte Fasermatte im Bereich mindestens eines Krafteinleitungsabschnitts gegenüber einer zweiten Fasermatte der zumindest einen Faserlage eine größere Fasermattendicke aufweist.

Krafteinleitungsabschnitte sind jene Abschnitte des Faserverbundbauteils in die zumindest in einem verbauten Zustand des Faserverbundbauteils Kraft eingeleitet wird. Dies können unter anderem Befestigungspunkte des Bauteils zum Befestigen an anderen Bauteilen sein. Speziell in diesen Krafteinleitungsabschnitten können vorliegend dickere Fasermatten zur lokalen Verstärkung vorgesehen werden, als in anderen Abschnitten des Bauteils.

Wie bereits beschrieben, weist die gebildete Faserlage eine über das Bauteil variierende Fasermattendicke auf, die in den Krafteinleitungsabschnitten erhöht ist. Die gegebenenfalls innerhalb der Faserlage angeordneten Überlappungsbereiche sind für die Dicken-Betrachtung der Faserschicht im Rahmen der gesamten Beschreibung unbeachtlich.

Außerdem kann das Faserverbundbauteil eine zweite Anzahl von die Krafteinleitungsabschnitte miteinander verbindenden Lastpfaden umfassen, wobei eine erste vorgeformte Fasermatte im Bereich mindestens eines Krafteinleitungsabschnitts eine gegenüber einer im Bereich mindestens eines Lastpfades angeordneten zweiten Fasermatte größere Fasermattendicke aufweist.

Als Lastpfade sind jene Bereiche des Faserverbundbauteils zu verstehen, die mehrere Krafteinleitungsabschnitte kraftleitend miteinander verbinden. So können beispielsweise ein erster und ein entfernt hierzu angeordneter zweiter Krafteinleitungsabschnitt mittels eines oder mehrerer Lastpfade verbunden sein. Erfolgt eine Einleitung einer Kraft in einem der Krafteinleitungsabschnitte, so wird die eingeleitete Kraft über den oder die Lastpfade zu dem anderen Krafteinleitungsabschnitt geleitet und durch diesen aus dem Bauteil ausgeleitet. Selbstverständlich können auch andere Krafteinleitungsabschnitte entsprechend vorgesehen werden.

Gemäß einer weiteren Ausführungsform sind benachbart zu den Lastpfaden und/oder zu den Krafteinleitungsabschnitten Füllflächen angeordnet, wobei im Bereich der Füllflächen angeordnete vorgeformte Fasermatten eine geringere Fasermattendicke aufweisen, als die Fasermatten im Bereich der Krafteinleitungsabschnitte und/oder als die vorgeformten Fasermatten im Bereich der Lastpfade.

Die Füllflächen spielen demnach für einen Kraftfluss eine untergeordnete Rolle und dienen vorzugsweise einer flächigen Ausgestaltung des Bauteils ohne eigene tragende oder kraftleitende Funktion. Daher ist eine in der Regel geringe Belastung dieses bzw. dieser Abschnitt(e) anzunehmen, so dass die dort vorgesehenen Fasermatten eine geringere Fasermattendicke aufweisen können als in den belasteten Abschnitten der Krafteinleitungsabschnitte und Lastpfade.

Diese Ausgestaltung ermöglicht auf besondere Weise Material und Gewicht an jenen Stellen einzusparen, an welchen bei bisher bekannten Faserverbundbauteilen Fasermaterial ohne zusätzlichen Nutzen in großem Maße vorgesehen ist.

Außerdem können die im Bereich des mindestens einen Lastpfads angeordneten vorgeformten Fasermatten eine entlang der Lastpfade ausgerichtete Erstreckung aufweisen. Vorzugsweise sind die betreffenden vorgeformten Fasermatten entsprechend der Lastpfadform ausgestaltet.

Mit anderen Worten kann somit eine Trennung der vorgeformten Fasermatten unter Berücksichtigung der Lastkomponenten erfolgen. Die vorgeformten Fasermatten können derart lastoptimiert zugeschnitten sein, dass sie sich im Wesentlichen in Richtung der Lastpfade erstrecken und gleichzeitig benachbarte lastarme Bereiche nicht dieser jeweiligen Fasermatte zugeordnet sind. Im Gegensatz zu bekannten Zuschnitten, die schnittoptimiert für einen möglichst geringen Verschnitt der Fasermatten ausgelegt sind, wird in dieser Ausführungsform der Zuschnitt derart vorgesehen, dass die Fasermatten möglichst optimal den Lastpfaden folgen und somit Gewichts- und Festigkeitsoptimiert ausgelegt sind.

Auf diese Weise erfolgt in gewissem Maße eine Funktionstrennung der beschriebenen Abschnitte, um eine möglichst optimale Verteilung der Fasermatten mit den jeweils lokal erforderlichen Fasermattendicken zu erreichen und "überdimensionierte" Fasermatten in weniger belasteten Bereichen zu vermeiden und lediglich die stärker belasteten Bereiche zu verstärken, indem die Fasermatten derart vorgeformt sind, dass diese im Wesentlichen nur die zur Verstärkung des Faserverbundbauteils erforderlichen Bereiche bilden.

Beispielsweise kann das Faserverbundbauteil als Türstruktur und/oder als Fahrzeugrahmenteil eines Kraftfahrzeugs ausgestaltet sein. Eine derartige Türstruktur kann Türrahmen bzw. -Rippen und/oder flächige Türelemente umfassen. Selbstverständlich können aber ebenso andere Bauteile, insbesondere Fahrzeugstrukturteile, auf diese Weise bereitgestellt werden.

Des Weiteren wird ein Verfahren gemäß Anspruch 7 zum Herstellen eines Faserverbundbauteils mit einer Faserstruktur, die mindestens eine Faserlage umfasst beschrieben. Vorzugsweise ist das Verfahren als Resin Transfer Molding Verfahren (RTM) ausgestaltet.

Die Erfindung wird nachfolgend unter Bezugnahme auf die Zeichnungen anhand eines Ausführungsbeispiels näher erläutert. Es zeigen:
Fig. 1 eine Türstruktur eines Kraftfahrzeugs als Faserverbundbauteil, und
Fig. 2 einen Querschnitt durch ein Faserverbundbauteil in schematischer Darstellung.

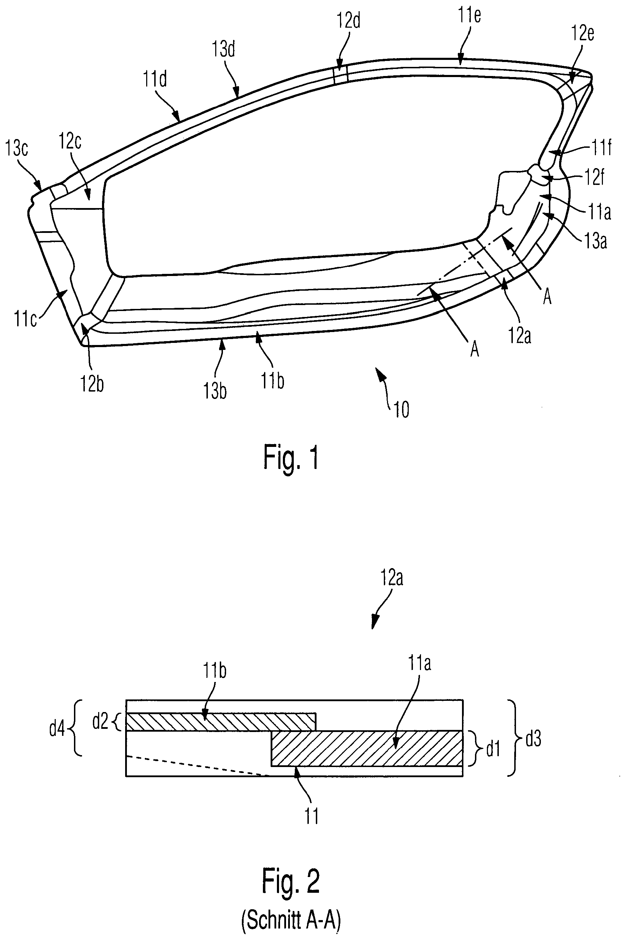

Die Fig. 1 zeigt eine Türstruktur eines Kraftfahrzeugs, welche Teil einer Fahrzeugstruktur sowie als Faserverbundbauteil ausgeführt ist. Ein Querschnitt durch einen nachfolgend näher erläuterten Überlappungsabschnitt 12a der in Fig. 1 dargestellten Türstruktur ist in Fig. 2 schematisch dargestellt.

Demnach weist das Faserverbundbauteil 10 eine Faserstruktur auf, die in der dargestellten Ausführungsform eine Faserlage 11 umfasst, wobei die Faserlage 11 von einer Anzahl von vorgeformten Fasermatten 11 a-f gebildet wird. Hierbei weist eine (erste) der vorgeformten Fasermatten 11a,11c eine größere Fasermattendicke d1 auf, als eine zweite vorgeformte Fasermatte 11b bzw. 11d-f aus der Anzahl von vorgeformten Fasermatten 11a-f der Faserlage 11.

Hierbei kann die Faserlage 11 bzw. jede der Fasermatten 11a-f eine Gewebeschicht, eine Gelegeschicht, eine Geflechtschicht und/oder eine unidirektionale oder multidirektionale Faserschicht umfassen.

Außerdem sind die vorgeformten Fasermatten 11a-f flächig nebeneinander angeordnet, um die Faserlage 11 des Faserverbundbauteils 10 zu bilden. Dabei sind die vorgeformten und flächig nebeneinander angeordneten Fasermatten 11a-f in einander zugewandten Randbereichen unter Bildung jeweils eines Überlappungsbereichs 12a-f miteinander überlappend angeordnet, um die zumindest eine Faserlage 11 zu bilden.

Das Faserverbundbauteil 10 umfasst als Türstruktur zwei Krafteinleitungsabschnitte 13a, 13c, wobei die vorgeformten Fasermatten 11a, 11c im Bereich der Krafteinleitungsabschnitte 13a, 13c eine gegenüber anderen Fasermatten 11b, 11d-f der Faserlage 11 größere Fasermattendicke d1 aufweisen. Die Krafteileitungsabschnitte 13a,13c sind insbesondere im Scharnierbereich des als Türstruktur ausgebildeten Faserverbundbauteils 10 sowie in deren Schlossbereich vorgesehen, da in diesen Bereichen eine hohe mechanische Belastung infolge von zu übertragenen Momenten sowie von Zug- und Druckkräften zu erwarten ist.

Zusätzlich umfasst das Faserverbundbauteil 10 zwei die beiden Krafteinleitungsabschnitte 13a, 13c miteinander verbindende Lastpfade 13b, 13d, die vorliegend durch die Fasermatten 11b, 11d-f gebildet werden. Die vorgeformten Fasermatten 11a bzw. 11c im Bereich der Krafteinleitungsabschnitte 13a, 13c weisen eine speziell gegenüber den im Bereich der Lastpfade 13b, 13d angeordneten Fasermatten 11b, 11d-f eine größere Fasermattendicke d1 auf. Als Lastpfade 13b, 13d sind bei diesem Faserverbundbauteil 10 ein unterer Verbindungsholm zwischen den beiden Krafteinleitungsabschnitten 13a, 13c sowie ein oberer Fensterrahmen zu verstehen.

Optional können die in den Bereichen der Lastpfade 13b,13d vorgesehenen vorgeformten Fasermatten 11b, 11d-f untereinander ebenfalls unterschiedliche Fasermattendicken d2, d2' aufweisen. Hierdurch können die unterschiedlichen Lasten der einzelnen Lastpfade insgesamt und in Teilbereichen der Lastpfade entsprechend optimal berücksichtigt werden. So wird der von der Fasermatte 11b gebildete untere Verbindungsholm deutlich stärker belastet, als der obere Fensterrahmen, so dass neben einer entsprechenden äußeren Formgebung durch die unterschiedlichen Fasermattendicken eine gezielte und optimale Verstärkung erzielt wird.

Gleiches gilt für die Fasermatten 11a, 11c der Krafteinleitungsabschnitte 13a,13c, die ebenfalls nicht die gleiche, sondern unterschiedliche Dicken d1 und d1' aufweisen können.

Wie in Fig. 2 durch einen gestrichelt dargestellten alternativen Wandverlauf lediglich schematisch angedeutet, kann eine Wandstärke d4 im Bereich der dünneren Fasermatten, wie beispielsweise der Fasermatten 11b, 11d-f, ebenfalls gegenüber dem Bereich der dickeren Fasermatten 1a,11c, mit einer Wandstärke d3, reduziert sein.

Nicht dargestellt sind in den beiden Figuren Füllflächen, die keiner oder nur einer geringen Krafteinwirkung ausgesetzt sind. Diese können jedoch optional benachbart zu den Lastpfaden 13b, 13d und/oder zu den Krafteinleitungsabschnitten 13a,13c angeordnet sein, wobei im Bereich der Füllflächen angeordnete vorgeformte Fasermatten eine geringere Fasermattendicke aufweisen, als die Fasermatten 11a, 11c im Bereich der Krafteinleitungsabschnitte 13a,13c und/oder als die vorgeformten Fasermatten 11b, 11d-f im Bereich der Lastpfade 13b, 13d.

Wie aus Fig. 1 erkennbar ist, weisen die im Bereich der Lastpfade 13b, 13d angeordneten vorgeformten Fasermatten 11b, 11d-f eine entlang der Lastpfade 13b, 13d ausgerichtete Erstreckung auf. Ein Zuschnitt der einzelnen vorgeformten Fasermatten erfolgt, wie anhand der Überlappungsabschnitte 12a-f erkennbar ist, vorzugsweise unter lastoptimierten Gesichtspunkten anstatt nach geometrischen und Verschnitt-optimierten Kriterien.

Auf diese Weise kann mit dem dargestellten Faserverbundbauteil 10 eine lastoptimierte Faserstruktur erzielt werden, die es ermöglicht, ein Gewicht möglichst gering zu halten und gleichzeitig kostenintensives Fasermaterial einzusparen bzw. an jenen Stellen vorzusehen, an welchen ein entsprechender lastbedingter Bedarf besteht.

## Patentansprüche

1. Faserverbundbauteil (10), insbesondere für eine Fahrzeugstruktur, mit einer Faserstruktur, die mindestens eine Faserlage (11) umfasst, wobei zumindest eine der mindestens einen Faserlage (11) von einer Anzahl von vorgeformten Fasermatten (11a-f) gebildet wird,
wobei eine erste vorgeformte Fasermatte (11a,11e) eine größere Fasermattendicke (d1) aufweist, als eine zweite vorgeformte Fasermatte (11b,11d-f) aus der Anzahl von vorgeformten Fasermatten (11a-f) der zumindest einen Faserlage (11) **dadurch gekennzeichnet, dass** die vorgeformten Fasermatten (11a-f) flächig nebeneinander angeordnet sind, um die Faserlage (11) zu bilden, und das Faserverbundbauteil (10) eine erste Anzahl von Krafteinleitungsabschnitten (13a,13c) umfasst, wobei die erste vorgeformte Fasermatte (11a) im Bereich mindestens eines der Krafteinleitungsabschnitte (13a) vorgesehen ist,
wobei die gebildete Faserlage (11) eine über das Faserverbundbauteil (10) variierende Fasermattendicke aufweist, die in den Krafteinleitungsabschnitten (13a) erhöht ist.

2. Faserverbundbauteil (10) nach Anspruch 1, **dadurch gekennzeichnet, dass** die zumindest eine Faserlage (11) eine Gewebeschicht, eine Gelegeschicht, eine Geflechtschicht und/oder eine unidirektionale oder multidirektionale Faserschicht umfasst.

3. Faserverbundbauteil (10) nach Anspruch 1 oder 2, **dadurch gekennzeichnet, dass** die vorgeformten und flächig nebeneinander angeordneten Fasermatten (11a-f) in einander zugewandten Randbereichen (12a-f) miteinander überlappend angeordnet sind, um die zumindest eine Faserlage (11) zu bilden.

4. Faserverbundbauteil (10) nach einem der Ansprüche 1 bis 3, **dadurch gekennzeichnet, dass** das Faserverbundbauteil (10) eine zweite Anzahl von die Krafteinleitungsabschnitte (13a,13c) miteinander verbindenden Lastpfaden (13b,13d) umfasst, wobei die erste vorgeformte Fasermatte (11a, 11c) im Bereich mindestens eines Krafteinleitungsabschnitts (13a,13c) eine gegenüber einer im Bereich des mindestens einen Lastpfades (13b,13d) angeordneten zweiten Fasermatte größere Fasermattendicke (d1,d1') aufweist.

5. Faserverbundbauteil (10) nach Anspruch 4, **dadurch gekennzeichnet, dass** benachbart zu den Lastpfaden (13b,13d) und/oder zu den Krafteinleitungsabschnitten (13a,13c) Füllflächen angeordnet sind, wobei im Bereich der Füllflächen angeordnete vorgeformte Fasermatten eine geringere Fasermattendicke aufweisen, als die Fasermatten (11a,11c) im Bereich der Krafteinleitungsabschnitte (13a,13c) und/oder als die vorgeformten Faserteile (11b,11d-f) im Bereich der Lastpfade (13b, 13d).

6. Faserverbundbauteil (10) nach Anspruch 4 oder 5, **dadurch gekennzeichnet, dass** die im Bereich des mindestens einen Lastpfads (13b,13d) angeordneten vorgeformten Faserteile (11b,11d-f) eine entlang der Lastpfade (13b,13d) ausgerichtete Erstreckung aufweisen.

7. Verfahren zum Herstellen eines Faserverbundbauteils (10) mit einer Faserstruktur, die mindestens eine Faserlage (11) umfasst, mit den folgenden Schritten:
- Bereitstellen einer Anzahl von vorgeformten Fasermatten (11a-f), um die mindestens eine Faserlage (11) zu bilden,
- Einlegen der vorgeformten Fasermatten (11a-f) in eine Spritzform,
- Schließen der Spritzform, Imprägnieren der vorgeformten Fasermatten (11a-f) und Aushärten zu dem Faserverbundbauteil,
wobei eine erste vorgeformte Fasermatte (11a, 11e)) eine größere Fasermattendicke (d1) aufweist, als eine zweite vorgeformte Fasermatte (11b,11d-f) aus der Anzahl von vorgeformten Fasermatten (11a-f) der zumindest einen Faserlage (11), **dadurch gekennzeichnet, dass** die vorgeformten Fasermatten (11a-f) flächig nebeneinander angeordnet sind, um die Faserlage (11) zu bilden, und das Faserverbundbauteil eine erste Anzahl von Krafteinleitungsabschnitten (13a,13c) umfasst, wobei die erste vorgeformte Fasermatte (11a) im Bereich mindestens eines der Krafteinleitungsabschnitte (13a) vorgesehen ist, wobei die gebildete Faserlage (11) eine über das Faserverbundbauteil (10) variierende Fasermattendicke aufweist, die in den Krafteinleitungsabschnitten (13a) erhöht ist.

8. Verfahren nach Anspruch 7, **dadurch gekennzeichnet, dass** die vorgeformten Fasermatten (11a-f) flächig nebeneinander und in einander zugewandten Randbereichen (12a-f) miteinander überlappend angeordnet werden, um die zumindest eine Faserlage (11) zu bilden.

9. Faserverbundbauteil (10) nach einem der Ansprüche 1 bis 6, **dadurch gekennzeichnet, dass** das Faserverbundbauteil (10) als Türstruktur und/oder als Fahrzeugrahmenteile eines Kraftfahrzeugs ausgestaltet ist.

## Claims

1. A fibre composite component (10), especially for a vehicle structure, having a fibre structure which comprises at least one fibre layer (11),
wherein at least one of the at least one fibre layers (11) is formed of a number of pre-formed fibre mats (11a-f),
wherein a first pre-formed fibre mat (11a, 11e) has a greater fibre mat thickness (d1) than a second pre-formed fibre mat (11b, 11d-f) from the number of pre-formed fibre mats (11a-f) of the at least one fibre layer (11), **characterised in that** the pre-formed fibre mats (11a-f) are arranged in planar manner next to each other in order to form the fibre layer (11), and the fibre composite component (10) comprises a first number of force introduction portions (13a, 13c), the first pre-formed fibre mat (11a) being provided in the region of at least one of the force introduction portions (13a), the fibre layer (11) formed having a fibre mat thickness which varies over the fibre composite component (10) and which is increased in the force introduction portions (13a).

2. A fibre composite component (10) according to Claim 1, **characterised in that** the at least one fibre layer (11) comprises a woven fabric layer, a laid fabric layer, a braided layer and/or a unidirectional or multidirectional fibrous layer.

3. A fibre composite component (10) according to Claim 1 or Claim 2, **characterised in that** the pre-formed fibre mats (11a-f) which are arranged in planar manner next to one another are arranged overlapping each other in edge regions (12a-f) which face each other, in order to form the at least one fibre layer (11).

4. A fibre composite component (10) according to one of Claims 1 to 3, **characterised in that** the fibre composite component (10) comprises a second number of load paths (13b, 13d) which connect the force introduction portions (13a, 13c) together, the first pre-formed fibre mat (11a, 11c) having in the region of at least one force introduction portion (13a, 13c) a greater fibre mat thickness (d1, d1') relative to a second fibre mat arranged in the region of the at least one load path (13b, 13d).

5. A fibre composite component (10) according to Claim 4, **characterised in that** filling surfaces are arranged adjacent to the load paths (13b, 13d) and/or to the force introduction portions (13a, 13c), with pre-formed fibre mats arranged in the region of the filling surfaces having a lesser fibre mat thickness than the fibre mats (11a, 11c) in the region of the force introduction portions (13a, 13c) and/or than the pre-formed fibre parts (11b, 11d-f) in the region of the load paths (13b, 13d).

6. A fibre composite component (10) according to Claim 4 or Claim 5, **characterised in that** the pre-formed fibre parts (11b, 11d-f) arranged in the region of the at least one load path (13b, 13d) have an extent oriented along the load paths (13b, 13d).

7. A method for producing a fibre composite component (10) having a fibre structure which comprises at least one fibre layer (11), having the following steps:
- providing a number of pre-formed fibre mats (11a-f) in order to form the at least one fibre layer (11),
- placing the pre-formed fibre mats (11a-f) in an injection mould,
- closing the injection mould, impregnating the pre-formed fibre mats (11a-f) and curing to form the fibre composite component,
wherein a first pre-formed fibre mat (11a, 11e) has a greater fibre mat thickness (d1) than a second pre-formed fibre mat (11b, 11d-f) from the number of pre-formed fibre mats (11a-f) of the at least one fibre layer (11)the pre-formed fibre mats (11a-f) are arranged in planar manner next to each other in order to form the fibre layer (11), and the fibre composite component comprises a first number of force introduction portions (13a, 13c), the first pre-formed fibre mat (11a) being provided in the region of at least one of the force introduction portions (13a), the fibre layer (11) formed having a fibre mat thickness which varies over the fibre composite component (10) and which is increased in the force introduction portions (13a).

8. A method according to Claim 7, **characterised in that** the pre-formed fibre mats (11a-f) are arranged in planar manner next to one another and overlapping each other in edge regions (12a-f) which face each other, in order to form the at least one fibre layer (11).

9. A fibre composite component (10) according to one of Claims 1 to 6, **characterised in that** the fibre composite component (10) is configured as a door structure and/or as vehicle frame parts of a motor vehicle.

## Revendications

1. Elément composite renforcé par des fibres (10) destiné en particulier à une structure de véhicule comprenant une structure de fibres comportant au moins une couche de fibres (11), au moins une couche de fibres (11) étant formée par un ensemble de nattes de fibres préformées (11a-f), une première natte de fibres préformée (11a, 11e) ayant une épaisseur (d1) supérieure à celle d'une seconde natte de fibres préformée (11b, 11d-f) parmi l'ensemble de nattes de fibres préformées (11a-f de la couche de fibres (11),
**caractérisé en ce que**
les nattes de fibres préformées (11a-f) sont positionnées à plat les unes à côté des autres pour former la couche de fibres (11), et l'élément composite renforcé par des fibres (10) comprend un premier ensemble de segments d'introduction de force (13a, 13c), la première natte de fibres préformée (11a) étant située dans la zone d'au moins l'un des segments d'introduction de force (13a), la couche de fibres formée (11) ayant une épaisseur de natte de fibres variant sur l'élément composite renforcé par des fibres (10) qui est augmentée dans les segments d'introduction de force (13a).

2. Elément composite renforcé par des fibres (10) conforme à la revendication 1,
**caractérisé en ce que**
la couche de fibres (11) comporte une couche de tissu, une couche de non-tissé, une couche de tresse et/ou une couche de fibres unidirectionnelles ou multidirectionnelles.

3. Elément composite renforcé par des fibres (10) conforme à la revendication 1 ou 2,
**caractérisé en ce que**
les nattes de fibres (11a-f) préformées et positionnées à plat les unes à côté des autres se chevauchent dans des zones de bords (12a-f) tournées les unes vers les autres pour former la couche de fibres (11).

4. Elément composite renforcé par des fibres (10) conforme à l'une des revendications 1 à 3,
**caractérisé en ce qu'**
il comporte un second ensemble de chemins de charge (13b, 13d) reliant les segments d'introduction de force (13a, 13c), la première natte de fibres (11a, 11c) préformée ayant dans la zone d'au moins un segment d'introduction de force (13a, 13c) une épaisseur de natte de fibres (d1, d1') supérieure à celle d'une seconde natte de fibres située dans la zone du chemin de charge (13b, 13d).

5. Elément composite renforcé par des fibres (10) conforme à la revendication 4,
**caractérisé en ce que**
des surfaces de remplissage sont positionnées au voisinage des chemins de charge (13b, 13d) et/ou des segments d'introduction de force (13a, 13c) les nattes de fibres préformées situées dans la zone des surfaces de remplissage ayant une épaisseur inférieure à celle des nattes de fibres (11a, 11c) situées dans la zone des segments d'introduction de force (13a, 13c) et/ ou à celle des parties de fibres préformées (11b, 11d-f) situées dans la zone des chemins de charge (13b, 13d).

6. Elément composite renforcé par des fibres (10) conforme à la revendication 4 ou 5,
**caractérisé en ce que**
les parties de fibres préformées (11b, 11d-f) situées dans la zone du chemin de charge (13b, 13d) ont une extension dirigée le long des chemins de charge (13b, 13d).

7. Procédé d'obtention d'un élément composite renforcé par des fibres (10) ayant une structure de fibres qui comporte au moins une couche de fibres (11) comprenant les étapes suivantes consistant à :
- se procurer un ensemble de nattes de fibres préformées (11a-f) pour former la couche de fibres (11),
- introduire les nattes de fibres préformées (11a-f) dans un moule d'injection,
- fermer le moule d'injection, imprégner les nattes de fibres préformées (11a-f) et les durcir pour obtenir l'élément composite renforcé par des fibres,
- une première natte de fibres préformée (11a-e) ayant une épaisseur (d1) supérieure à celle d'une seconde natte de fibres préformée (11b, 11d-f) parmi l'ensemble de nattes de fibres préformées (11a-f) de la couche de fibres (11),
**caractérisé en ce que**
- les nattes de fibres préformées (11a-f) sont positionnées à plat les unes à côté des autres pour former la couche de fibres (11), et l'élément composite renforcé par des fibres comprend un premier ensemble de segments d'introduction de force (13a, 13c), la première natte de fibres préformée (11a) étant située dans la zone d'au moins l'un des segments d'introduction de force (13a), et la couche de fibres (11) formée ayant une épaisseur variable sur l'élément composite renforcé par des fibres (10) qui est augmentée dans les segments d'introduction de force (13a).

8. Procédé conforme à la revendication 7,
**caractérisé en ce que**
les nattes de fibres préformées (11a-f sont positionnées à plat les unes à côté des autres, et se chevauchent dans les zones de bords (12a-f) tournées les unes vers les autres, pour former la couche de fibres (11).

9. Elément composite renforcé par des fibres (10) conforme à l'une des revendications 1 à 6,
**caractérisé en ce qu'**
il est réalisé sous la forme d'une structure de porte et/ou d'une partie de châssis d'un véhicule.
